# FASCICULE DE BREVET EUROPEEN

(11) **EP 2 899 960 B1**
(45) Date de publication et mention de la délivrance du brevet: **12.09.2018**
(21) Numéro de dépôt: 15151186.2
(22) Date de dépôt: 14.01.2015
(51) Int. Cl.: H04M 15/00, H04M 17/02, H04M 17/00, H04W 12/12

(54) **Procédé et système de détection de contournement d'un réseau de téléphonie mobile lors de communications non synchronisées.**
Verfahren und System zum Erfassen der Umgehung eines mobilen Telefonnetzes bei nicht synchronisierten Kommunikationen
Method and system for detecting the bypassing of a mobile telephony network during unsynchronised communications

(30) Priorité: 23.01.2014 FR 1450578
(43) Date de publication de la demande: 29.07.2015
(73) Titulaire: Araxxe, 92200 Neuilly sur Seine (FR)
(72) Inventeur: Orsini, Philippe, 28042 Madrid (ES); Pelous, Marc, 69003 Lyon (FR); Lesage, Xavier, 92200 Neuilly sur Seine (FR); Scholer, Christophe, 69100 Villeurbanne (FR)
(74) Mandataire: IPAZ

(56) Documents cités:
- EP-A1- 1 675 329
- EP-A1- 2 490 423
- WO-A1-01/06752
- WO-A1-2013/010931
- WO-A1-2013/037383
- WO-A2-2008/071857
- DE-A1-102005 027 027
- FR-A1- 2 938 392
- "Arabypass - Detecting bypass traffic with the arabypass managed service", ARAXXE,, 1 janvier 2006 (2006-01-01), pages 1-8, XP003030083,

## Description

La présente invention concerne un procédé pour la détection de contournement d'un réseau de communication téléphonique lors de communications non synchronisées, telles que les communications par messages téléphoniques. Elle concerne également un système mettant en oeuvre un tel procédé.

Le domaine de l'invention est le domaine de la détection de contournements des réseaux de téléphonie mobile, et en particulier lors de communications par messages téléphoniques tels que par exemple des messages SMS (pour « Short Message Service ») ou MMS (pour « Multimedia Messaging Service »).

### Etat de la technique

Les réseaux de téléphonie mobile subissent des contournements frauduleux orchestrés par des tiers qui disposent de technologies leur permettant d'intercepter les communications et de se substituer à des réseaux de téléphonie mobile, tout en bénéficient des services proposés par ces réseaux.

De plus, le développement des offres proposant, à des tarifs low-cost, des communications téléphoniques, dites illimitées, favorise ces contournements. En effet, les tiers souhaitant mettre en place de tels contournements frauduleux se procurent des abonnements clients illimités d'un opérateur, utilisent ensuite ces abonnements clients, par exemple en les installant dans des passerelles de contournement, pour réaliser les contournements aux dépens de ce même opérateur.

Des acteurs spécialisés dans ce domaine proposent des technologies pour détecter ces opérations de contournements dans le cadre de communications synchronisées ou en temps réel. Les technologies proposées mettent en oeuvre un ensemble de « robots », munis de carte SIM (pour « Subscriber Identity Module »), qui génèrent des communications téléphoniques synchronisées. En fonction de l'identifiant de l'appelant théoriquement attendu et l'identifiant de l'appelant réellement obtenu pendant la communication, il est possible de détecter un contournement, également appelé « bypass » en anglais. Une telle technologie est par exemple décrite dans la demande de brevet WO 2008/071857 déposée par la Demanderesse.

Cependant, la technologie décrite dans ce document, et plus généralement les techniques connues de l'état de la technique, ne permettent pas de détecter des contournements effectués dans le cadre de communications par messages téléphoniques, et plus généralement dans le cadre d'une communication qui n'est pas synchronisée. Ces techniques s'appliquent uniquement aux appels téléphoniques, c'est-à-dire aux communications téléphoniques synchronisées.

L'invention a pour but de pallier les inconvénients précités.

Un autre but de l'invention est de proposer un procédé de détection de contournements d'un réseau de téléphonie mobile lors d'opérations de communications non synchronisées.

En particulier, un autre but de la présente invention est de proposer un procédé de détection de contournements lors d'une communication par messages téléphoniques, tels que des messages SMS ou MMS.

Enfin, un but de l'invention est de proposer un procédé de détection de contournements d'un réseau de téléphonie mobile lors d'opérations de communications non synchronisées diminuant les erreurs de détection, également appelées les « faux-positifs ».

### Exposé de l'Invention

L'invention permet d'atteindre au moins l'un des buts précités par un procédé de détection de contournements d'un réseau de téléphonie mobile lors de communications téléphoniques non synchronisées, en particulier lors de communications téléphoniques par messages téléphoniques et encore plus particulièrement lors de communications par SMS ou MMS, ledit procédé comprenant les étapes suivantes :
- génération d'au moins une donnée d'identification, dit identifiant de message ;
- émission, par au moins un émetteur vers au moins un récepteur, dudit identifiant de message par une communication téléphonique non synchronisée réalisée au moins en partie sur un réseau de téléphonie mobile ;
- détermination, grâce audit identifiant de message :
   ▪ d'au moins une donnée d'identification, dite identifiant émetteur en émission, relative à l'émission de ladite communication non synchronisée, et
   ▪ d'au moins une donnée d'identification, dite identifiant émetteur en réception, relative à l'émission de ladite communication non synchronisée reçue par ledit récepteur ; et
- détection d'un contournement lors de ladite communication téléphonique non synchronisée par comparaison desdits identifiants émetteur en émission et en réception.

Dans la présente demande, on entend par « communication téléphonique synchronisée » une communication téléphonique réalisée, au moins en partie au travers d'un réseau de téléphonie mobile, entre un émetteur et un récepteur, et nécessitant que l'émetteur et le récepteur soient connectés ensemble en temps réel lors d'au moins une partie de ladite communication. Ainsi, un exemple de communication téléphonique synchronisée est un appel téléphonique qui nécessite que l'émetteur et le récepteur soient connectés l'un à l'autre en temps réel lors d'au moins une partie de l'appel.

Dans la présente demande, on entend par « communication téléphonique non synchronisée » une communication réalisée, au moins en partie au travers d'un réseau de téléphonie mobile, entre un émetteur et un récepteur, et lors de laquelle il existe une durée non-nulle, plus ou moins longue, entre la fin de la communication du côté de l'émetteur et le début de la communication du côté du récepteur. Ainsi, un exemple de communication téléphonique non synchronisée est un message SMS ou MMS lors duquel l'émetteur a fini d'envoyer le message alors que le récepteur n'a pas commencé à le recevoir. Il arrive parfois qu'il y ait une durée non négligeable entre la fin de l'envoi du message par l'émetteur et le début de la réception du message par le récepteur.

Ainsi, le procédé selon l'invention permet de détecter un ou des contournements d'un réseau de téléphonie mobile lors de communications non synchronisées, telles que des communications réalisées par message de type SMS ou MMS. Pour ce faire, le procédé selon l'invention prévoit l'émission d'un émetteur vers un récepteur d'un identifiant de message, en particulier un identifiant de message unique, par une communication non synchronisée, également appelée communication de test dans la suite de la demande. L'identifiant de message permet d'identifier la communication de test transmise de l'émetteur vers le récepteur. Une fois la communication de test identifiée, il est alors possible de déterminer un ou des identifiants émetteur utilisés en émission et un ou des identifiants émetteur reçus par le récepteur et de comparer ces identifiants pour détecter un contournement lors de la communication de test.

De plus, l'identifiant de message permet d'éviter des erreurs lors de l'identification de contournements. En effet, la communication entre l'émetteur et le récepteur étant non synchronisée, il est possible qu'une autre communication non synchronisée soit réalisée par un tiers vers le même récepteur en toute conformité depuis un numéro de téléphone utilisé de manière tout à fait légale. L'identifiant de message permet d'éviter de confondre la communication de test avec la communication réalisée par un tiers et ainsi de détecter le numéro tiers comme servant à un contournement.

Suivant une version préférée du procédé selon l'invention, la communication téléphonique non synchronisée peut consister en une transmission d'un message téléphonique de type SMS ou MMS et l'identifiant de message est inséré dans le contenu dudit message.

Dans ce cas, le procédé selon l'invention permet de détecter des contournements dans le cadre des SMS ou MMS. L'identifiant du message est préférentiellement inséré dans le corps du message et peut consister en une combinaison de caractères, telles que des lettres, des chiffres et/ou des signes, et/ou de mots et/ou de phrases.

Avantageusement, l'identifiant de message est une phrase ou une partie d'une phrase ayant un sens dans une langue utilisée par les utilisateurs du côté de l'émetteur et/ou du récepteur. Ainsi, cela permet d'éviter une contre-détection du ou des numéros de téléphone mobile utilisés au niveau de l'émetteur et/ou du récepteur pour réaliser la détection de contournements.

L'identifiant de message est avantageusement généré selon une règle prédéterminée ou choisie dans une base de donnée d'identifiants de message.

Avantageusement, l'identifiant du message peut être codé suivant un algorithme ou une relation de codage prédéterminée connue d'une part par l'émetteur et/ou par le récepteur.

L'au moins un identifiant émetteur en émission, respectivement l'au moins un identifiant émetteur en réception, comprend :
- un identifiant d'un centre technique d'acheminement de ladite communication non synchronisée, et en particulier du message, utilisé en émission, respectivement reçu par le récepteur ; et/ou
- un identifiant de l'émetteur émettant le message, respectivement un identifiant d'émetteur reçu par le récepteur.

Suivant une version préférée du procédé selon l'invention, l'étape de détection du détournement peut être réalisée par un site, dit central, distant de l'émetteur et/ou du récepteur. Dans cette version préférée, le procédé comprend en outre les étapes suivantes réalisées avant l'étape de détection :
- une transmission, dudit émetteur vers ledit site distant, de l'au moins un identifiant d'émetteur en émission en association avec l'identifiant de message, et/ou
- une transmission, dudit récepteur vers ledit site distant, de l'au moins un identifiant émetteur en réception en association avec l'identifiant de message.

Le site central peut être distant de l'émetteur et du récepteur. Dans ce cas, l'émetteur et le récepteur transmettent au site central, le ou les identifiants d'émetteur en émission, respectivement le ou les identifiants d'émetteur en réception, en association avec l'identifiant de message. Le site central reçoit les identifiants émetteur transmis et réalise la comparaison des identifiants émetteur reçus. Lorsque les identifiants émetteur en émission et en réception sont différents le site central permet d'alerter l'opérateur du réseau mobile concerné par le contournement, par exemple par émission d'un message d'alerte signalant le contournement, éventuellement en indiquant le ou les identifiants concernés par le contournement.

Avantageusement, le procédé selon l'invention peut comprendre une sélection d'un identifiant émetteur en émission parmi une pluralité d'identifiants émetteur, en particulier d'un numéro de téléphone parmi une pluralité de numéros de téléphone, pour l'émission de la communication de test.

Par exemple, le procédé peut comprendre une sélection dans un serveur de cartes SIM, physiques ou virtuelles, chacune associée à un numéro de téléphone différent, d'une carte SIM qui sera utilisée pour l'émission de la communication de test.

La sélection de l'identifiant émetteur en émission, en particulier de la carte SIM, peut être réalisée par l'émetteur. Alternativement, la sélection peut être réalisée par un site distant indiquant à l'émetteur l'identifiant à utiliser. Suivant encore une autre alternative, la sélection peut être réalisée par un appareil, agencé entre l'émetteur et le récepteur par lequel la communication de test va transiter.

Avantageusement, le procédé selon l'invention peut comprendre une sélection d'un identifiant de réception vers lequel la communication de test est émise parmi une pluralité d'identifiants d'émission, en particulier d'un numéro de téléphone parmi une pluralité de numéros de téléphone.

Par exemple, le procédé peut comprendre une sélection dans un serveur de cartes SIM, physiques ou virtuelles, chacune associée à un numéro de téléphone différent, d'une carte SIM qui sera utilisée pour la réception de la communication de test, c'est-à-dire vers laquelle la communication de test sera émise.

La sélection de l'identifiant d'émission, en particulier de la carte SIM, peut être réalisée par l'émetteur. Alternativement, la sélection peut être réalisée par un site distant indiquant à l'émetteur l'identifiant à utiliser. Suivant encore une autre alternative, la sélection peut être réalisée par un appareil, agencé entre l'émetteur et le récepteur par lequel la communication de test va transiter avant d'atteindre le récepteur.

Suivant un autre aspect de l'invention il est proposé un procédé de détection de contournement, lors de communications téléphoniques non synchronisées, en particulier lors de communications téléphoniques par messages téléphoniques et encore plus particulièrement lors de communications par SMS ou MMS, pour une pluralité de réseau de téléphonie mobile, comprenant les étapes suivantes :
- sélection, parmi ladite pluralité de réseau de téléphonie mobile, d'au moins un réseau, dit de test ;
- détection d'un contournement sur ledit au moins un réseau de test par le procédé selon l'invention.

La sélection du réseau de test peut être réalisée en émission du côté de l'émetteur pour l'émission de la communication téléphonique non synchronisée.

La sélection du réseau testé en émission peut être réalisée par l'émetteur, ou un site distant indiquant à l'émetteur le réseau à utiliser pour l'émission, ou encore par un appareil, agencé entre l'émetteur et le récepteur par lequel la communication de test va transiter avant d'atteindre le récepteur.

La sélection du réseau de test peut, alternativement ou en plus, être réalisée en réception du côté du récepteur pour la réception de la communication téléphonique non synchronisée.

La sélection du réseau testé réception peut être réalisée par l'émetteur, ou un site distant indiquant à l'émetteur le réseau à utiliser pour l'émission, ou encore par un appareil, agencé entre l'émetteur et le récepteur par lequel la communication de test va transiter avant d'atteindre le récepteur.

Suivant encore un autre aspect de l'invention, il est proposé un système de détection de contournements d'un réseau de téléphonie mobile lors de communications téléphoniques non synchronisées, en particulier lors de communications téléphoniques par messages téléphoniques et encore plus particulièrement lors de communications par SMS ou MMS, ledit système comprenant :
- au moins un moyen de génération d'au moins une donnée d'identification, dit identifiant de message ;
- au moins un émetteur pour émettre ledit identifiant de message par une communication téléphonique non synchronisée réalisée au moins en partie sur un réseau de téléphonie mobile ;
- au moins un récepteur de ladite communication téléphonique non synchronisée ;
- des moyens pour déterminer, grâce audit identifiant de message :
   ▪ au moins une donnée d'identification, dite identifiant émetteur en émission, relative à l'émission de ladite communication non synchronisée, et
   ▪ au moins une donnée d'identification, dite identifiant émetteur en réception, relative à l'émission de ladite communication non synchronisée reçue par ledit récepteur ; et
- au moins un moyen de comparaison desdits identifiants émetteur en émission et en réception pour détecter un contournement lors de ladite communication téléphonique non synchronisée.

Suivant encore un autre aspect de l'invention, il est proposé un système de détection de contournement, lors de communications téléphoniques non synchronisées, en particulier lors de communications téléphoniques par messages téléphoniques et encore plus particulièrement lors de communications par SMS ou MMS, pour une pluralité de réseau de téléphonie mobile, ledit système comprenant :
- au moins un moyen de sélection, parmi ladite pluralité de réseau de téléphonie mobile, d'au moins un réseau, dit de test ; et
- un système de détection d'un contournement sur ledit au moins un réseau de test selon l'invention.

L'au moins un moyen de sélection peut comprendre au moins un moyen agencé du côté de l'émetteur et configuré pour sélectionner le réseau mobile pour l'émission de la communication téléphonique non synchronisée.

Alternativement ou en plus, l'au moins un moyen de sélection peut comprendre au moins un moyen agencé du côté du récepteur et configuré pour sélectionner le réseau mobile pour la réception de la communication téléphonique non synchronisée.

D'autres avantages et caractéristiques apparaîtront à l'examen de la description détaillée d'exemples nullement limitatifs, et des dessins annexés sur lesquels :
- la FIGURE 1 est une représentation schématique d'un exemple d'un procédé de détection d'un contournement dans un réseau de téléphonie mobile selon l'invention ; et
- la FIGURE 2 est une représentation schématique d'un exemple d'un procédé de détection d'un contournement dans une pluralité de réseaux de téléphonie mobile selon l'invention ;
- la FIGURE 3 est une représentation d'un exemple d'un système de détection d'un contournement dans un réseau de téléphonie mobile selon l'invention ; et
- la FIGURE 4 est une représentation schématique d'un exemple d'un système de détection d'un contournement dans une pluralité de réseaux de téléphonie mobile selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Les exemples qui vont être décrits concernent la détection de contournements dans le cadre de communications non synchronisées réalisées par messages de type SMS ou MMS. Bien entendu l'invention n'est pas limitée à ces exemples et concernent tout type de communications téléphoniques non synchronisées.

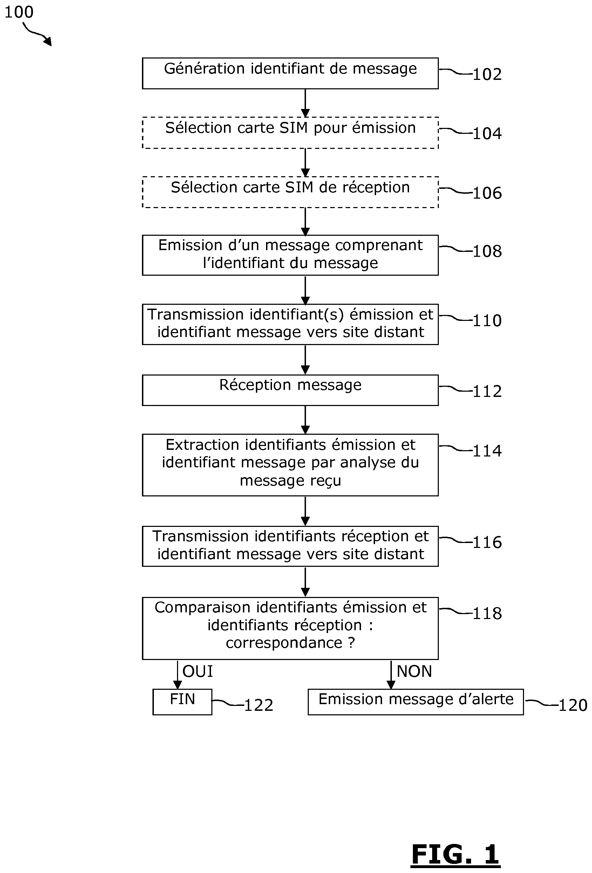

La FIGURE 1 est une représentation schématique d'un exemple de procédé de détection de contournements sur un réseau donné selon l'invention.

Le procédé 100 représenté comprend une étape 102 de génération d'un identifiant de message. Cette étape de génération peut consister à générer un identifiant de message avec une règle prédéterminée ou simplement à sélectionner dans une base de données, un identifiant de message parmi une pluralité d'identifiants de message préalablement définis.

Une étape 104 permet de sélectionner une carte SIM, physique ou virtuelle, pour l'émission du message. La sélection de la carte SIM peut être réalisée par l'intermédiaire d'un serveur de carte SIM et suivant une règle de sélection prédéterminée. Cette étape 104 est optionnelle. Elle n'est pas réalisée dans le cas où une seule carte SIM est utilisée pour l'émission de tous les messages de test ou dans le cas où le message de test est émis depuis un site Internet.

Une étape 106 permet de sélectionner une carte SIM, physique ou virtuelle, pour la réception du message. La sélection de la carte SIM peut être réalisée par l'intermédiaire d'un serveur de cartes SIM et suivant une règle de sélection prédéterminée. Cette étape 106 est optionnelle. Elle n'est pas réalisée dans le cas où une seule carte SIM est utilisée pour la réception du message de test.

Les étapes 104 et 106 peuvent être réalisées soit par l'émetteur, respectivement par le récepteur, soit par un site distant ou encore par un appareil associé à l'émetteur, respectivement au récepteur, et disposé entre l'émetteur et le récepteur.

Puis, lors d'une étape 108 un message test est généré et est émis depuis l'émetteur vers le récepteur. L'identifiant du message est inséré dans le corps du message.

Une étape 110, réalisée après l'étape 108, transmet vers un site distant de l'émetteur, appelé site central, l'identifiant de l'émetteur utilisé en émission, appelé identifiant émetteur en émission, associé à l'émetteur et l'identifiant de message inséré dans le message émis à l'étape 108. Dans cet exemple l'identifiant émetteur en émission est le numéro de téléphone de la carte SIM utilisée pour l'émission du message. Alternativement, ou en plus, l'identifiant émetteur en émission peut être un identifiant d'un centre technique d'acheminement du message. Lors de cette étape 110, le site central mémorise l'identifiant émetteur en émission en association avec l'identifiant de message dans une base de données.

Lors d'une étape 112 le message est reçu par le récepteur, après avoir été acheminé par un ou plusieurs réseaux de téléphonie mobile sur au moins une partie de son trajet entre l'émetteur et le récepteur.

Ensuite, le récepteur analyse le message reçu pour en extraire l'identifiant de l'émetteur, appelé identifiant émetteur en réception, tel qu'il l'a reçu et l'identifiant du message présent dans le corps du message, lors d'une étape 114.

L'identifiant émetteur en réception et l'identifiant du message sont transmis vers le site central lors d'une étape 116.

A l'étape 118, le site central extrait l'identifiant émetteur en émission mémorisé avec l'identifiant du message lors de l'étape 110. L'identifiant émetteur en émission préalablement mémorisé en association avec l'identifiant de message est comparé à l'identifiant émetteur en réception transmis par le récepteur.

Lorsque l'identifiant émetteur en émission ne correspond pas à l'identifiant émetteur en réception cela veut dire qu'il y a un contournement sur le ou les réseaux concernés lors de l'acheminement du message de test. Dans ce cas, une étape 120 réalise une émission d'un message d'alerte vers le ou les opérateurs concernés, éventuellement avec l'identifiant émetteur en réception ayant servi au contournement.

Lorsqu'à l'étape 118 l'identifiant émetteur en émission correspond à l'identifiant émetteur en réception, cela veut dire qu'il n'y a pas de contournement sur le ou les réseaux concernés lors de l'acheminement du message de test. Dans ce cas, il est mis fin au procédé lors d'une étape 122.

Dans le procédé 100 décrit en référence à l'a FIGURE 1, l'étape de comparaison est réalisée par un site central distant de l'émetteur et du récepteur. Alternativement, il est possible que la comparaison soit réalisée au niveau de l'émetteur, respectivement du récepteur. Dans ce cas, l'émetteur transmet les identifiants vers le récepteur lors de l'étape 110, respectivement le récepteur transmet les identifiants vers l'émetteur lors de l'étape 116.

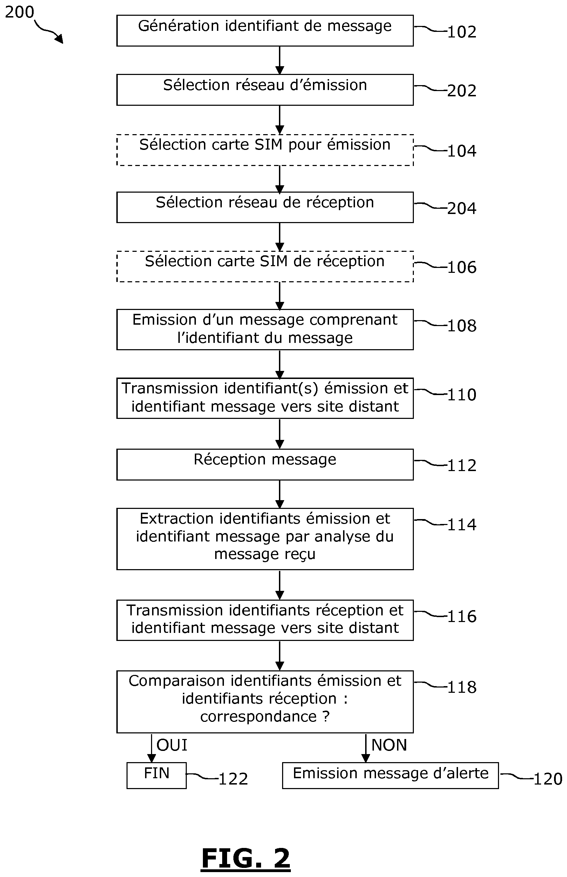

La FIGURE 2 est une représentation schématique d'un exemple de procédé de détection de contournements sur une pluralité de réseaux selon l'invention.

Le procédé 200 comprend toutes les étapes du procédé 100 décrit en référence à la FIGURE 1.

En plus, le procédé 200 comprend une étape 202 de sélection d'un réseau mobile, dit d'émission, parmi une pluralité de réseaux mobiles utilisés pour l'émission du message et/ou une étape 204 de sélection d'un réseau mobile, dit de réception, parmi une pluralité de réseaux mobiles utilisés pour la réception du message.

Dans l'exemple de la FIGURE 2, l'étape 202 de sélection du réseau d'émission est réalisée avant l'étape 104 de sélection d'une carte SIM en émission et l'étape 204 de sélection du réseau de réception est réalisée avant l'étape 106 de sélection d'une carte SIM en réception.

La sélection du réseau d'émission, respectivement du réseau de réception, peut être réalisée au niveau de l'émetteur, respectivement du récepteur, ou depuis un site distant, par exemple le site central.

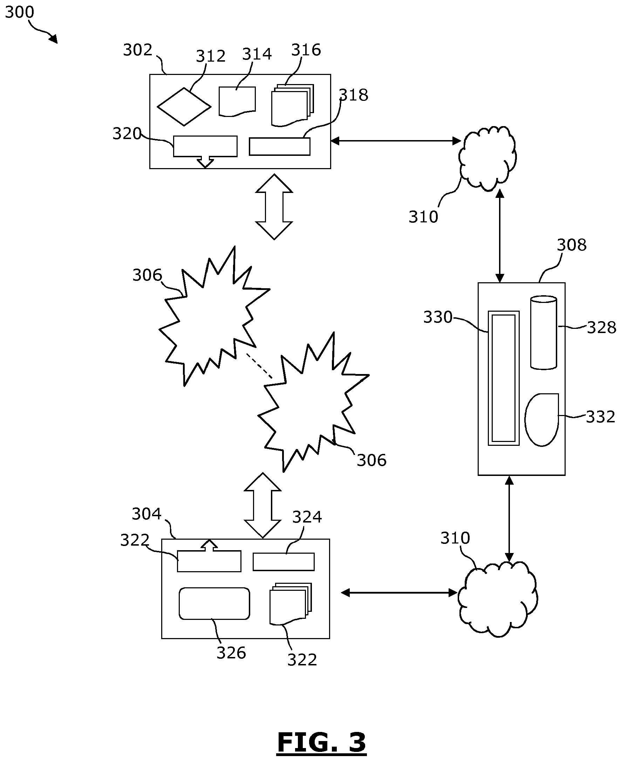

La FIGURE 3 est une représentation schématique d'un exemple d'un système de détection de contournements sur un réseau donné selon l'invention.

Le système 300 comprend un ou plusieurs robots émetteurs 302 et un ou plusieurs robots récepteurs 304 connectés d'une part à un ou plusieurs réseaux de téléphonie mobile 306 et d'autre part à un site central 308 au travers par exemple du réseau Internet 310.

Le ou chaque robot émetteur 302 comprend un module 312 de génération/sélection d'un identifiant de message, un module 314 de génération d'un message de test incorporant l'identifiant de message dans le message test, un serveur de cartes SIM 316 et un module 318 de sélection d'une carte SIM dans le serveur de cartes SIM 316.

Le ou chaque robot récepteur 304 comprend un module 322 de réception d'un message, un serveur de cartes SIM 322, un module 324 de sélection d'une carte SIM dans le serveur 322 de cartes SIM utilisées pour la réception d'un message de test par le module de réception et un module 326 d'analyse des messages reçus en vue d'en extraire un identifiant de message et un identifiant émetteur en réception.

Le site central 308 comprend une base de données 328 pour y mémoriser des identifiants de messages et des identifiants émetteur en émission et éventuellement des identifiants émetteur en réception, un module 330 de comparaisons d'identifiants émetteur, et éventuellement un module de communication 332 pour l'émission de messages d'alerte.

Bien entendu, lorsqu'une seule carte SIM est utilisée en émission, respectivement en réception, le système 300 ne comprend pas le serveur de cartes SIM 316, respectivement 322, et le module de sélection 318, respectivement 324.

De plus, il est possible que la comparaison soit réalisée soit au niveau de l'émetteur soit au niveau du récepteur sans utiliser de site central. Dans ce cas, la base de données 328, le module de comparaison 330 et éventuellement le module de communication 332 sont disposés au niveau de l'émetteur ou du récepteur.

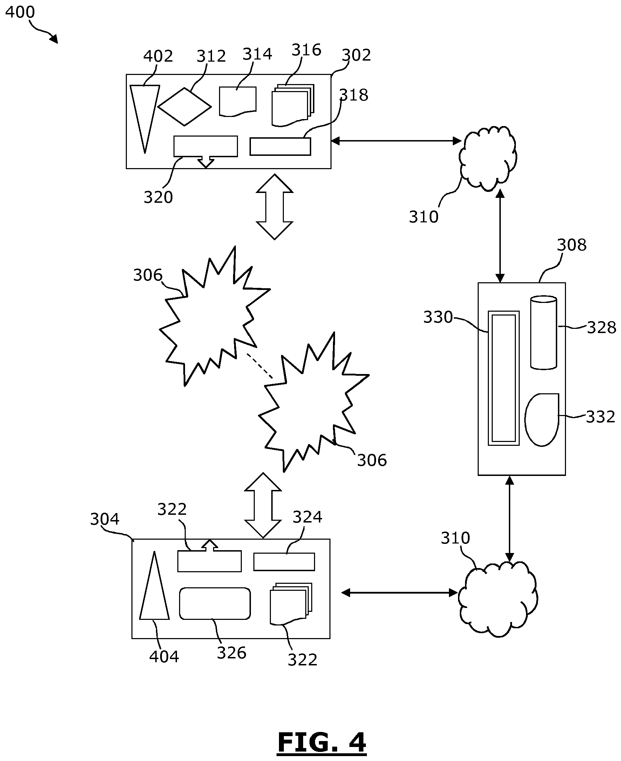

La FIGURE 4 est une représentation schématique d'un exemple d'un système de détection de contournements sur une pluralité de réseaux selon l'invention.

Le système 400 comprend tous les éléments du système 300. Le système comprend en outre, dans le robot émetteur 302, un module 402 de sélection d'un des réseaux 306 comme réseau d'émission du message de test. Alternativement ou en plus, le système 400 comprend dans le robot récepteur 304 un module 404 de sélection d'un des réseaux 306 comme réseau de réception du message de test.

## Revendications

1. Procédé (100) de détection de contournements d'un réseau de téléphonie mobile (306) lors de communications téléphoniques non synchronisées, ledit procédé (100) comprenant les étapes suivantes :
- génération (102) d'au moins une donnée d'identification, dit identifiant de message ;
- émission (108), par au moins un émetteur (302) vers au moins un récepteur (304), dudit identifiant de message par une communication téléphonique non synchronisée réalisée au moins en partie sur un réseau de téléphonie mobile (306) ;
- détermination (114, 118), grâce audit identifiant de message :
▪ d'au moins une donnée d'identification, dite identifiant émetteur en émission, relative à l'émission de ladite communication non synchronisée, et
▪ d'au moins une donnée d'identification, dite identifiant émetteur en réception, relative à l'émission de ladite communication non synchronisée reçu par ledit récepteur (304) ; et
- détection (118) d'un contournement lors de ladite communication téléphonique non synchronisée par comparaison desdits identifiants émetteur en émission et en réception.

2. Procédé (100) selon la revendication 1, **caractérisé en ce que** la communication téléphonique non synchronisée consiste en une transmission (108) d'un message téléphonique de type SMS ou MMS et l'identifiant de message est inséré dans le contenu dudit message.

3. Procédé (100) selon l'une quelconque des revendications précédentes, **caractérisé en ce que** l'identifiant de message est généré selon une règle prédéterminée.

4. Procédé (100) selon l'une quelconque des revendications précédentes, **caractérisé en ce que** l'au moins un identifiant émetteur en émission, respectivement en réception, comprend :
- un identifiant d'un centre technique d'acheminement de ladite communication non synchronisée, et en particulier du message, utilisé en émission, respectivement reçu par le récepteur (304) ; et/ou
- un identifiant de l'émetteur (302) émettant le message, respectivement un identifiant d'émetteur reçu par le récepteur (304).

5. Procédé (100) selon l'une quelconque des revendications précédentes, **caractérisé en ce que** l'étape (118) de détection du détournement est réalisée par un site distant (308) de l'émetteur (302) et/ou du récepteur (304), ledit procédé (100) comprenant en outre les étapes suivantes réalisées avant ladite étape de détection :
- une transmission (110), dudit émetteur (302) vers ledit site distant (308), de l'au moins un identifiant émetteur en émission en association avec l'identifiant de message, et/ou
- une transmission (116), dudit récepteur (304) vers ledit site distant (308), de l'au moins un identifiant émetteur en réception en association avec l'identifiant de message.

6. Procédé (200) de détection de contournement, lors de communications téléphoniques non synchronisées, pour une pluralité de réseau de téléphonie mobile (306), comprenant les étapes suivantes :
- sélection (202, 204), parmi ladite pluralité de réseau de téléphonie mobile (306), d'au moins un réseau dit de test ;
- détection d'un contournement sur ledit au moins un réseau de test par le procédé (100) selon l'une quelconque des revendications précédentes.

7. Procédé (200) selon la revendication précédente, **caractérisé en ce que** la sélection (202) du réseau de test est réalisée en émission du côté de l'émetteur (302) pour l'émission de la communication téléphonique non synchronisée.

8. Procédé (200) selon l'une quelconque des revendications 6 ou 7, **caractérisé en ce que** la sélection (204) du réseau de test est réalisée en réception du côté du récepteur (304) pour la réception de la communication téléphonique non synchronisée.

9. Système (300) de détection de contournements d'un réseau de téléphonie mobile (306) lors de communications téléphoniques non synchronisées, ledit système (300) comprenant :
- au moins un moyen (312) de génération d'au moins une donnée d'identification, dit identifiant de message ;
- au moins un émetteur (302, 320) pour émettre ledit identifiant de message par une communication téléphonique non synchronisée réalisée au moins en partie sur un réseau de téléphonie mobile (306) ;
- au moins un récepteur (304, 322) de ladite communication téléphonique non synchronisée,
- des moyens (328, 330) pour déterminer, grâce audit identifiant de message :
▪ au moins une donnée d'identification, dite identifiant émetteur en émission, relative à l'émission de ladite communication non synchronisée, et
▪ au moins une donnée d'identification, dite identifiant émetteur en réception, relative à l'émission de ladite communication non synchronisée reçue par ledit récepteur (304) ; et
- au moins un moyen (326) de comparaison desdits identifiants émetteur en émission et en réception pour détecter un contournement lors de ladite communication téléphonique non synchronisée.

10. Système (400) de détection de contournement, lors de communications téléphoniques non synchronisées, pour une pluralité de réseau de téléphonie mobile (306), ledit système (400) comprenant :
- au moins un moyen (402, 404) de sélection, parmi ladite pluralité de réseau de téléphonie mobile (306), d'au moins un réseau dit de test ; et
- un système (300) de détection d'un contournement selon la revendication précédente, sur ledit au moins un réseau de test (306).

11. Système (400) selon la revendication précédente, **caractérisé en ce que** l'au moins un moyen de sélection comprend au moins un moyen (402) agencé du côté de l'émetteur (302) et configuré pour sélectionner le réseau de téléphonie mobile (306) pour l'émission de la communication téléphonique non synchronisée.

12. Système (400) selon l'une quelconque des revendications 10 ou 11, **caractérisé en ce que** l'au moins un moyen de sélection comprend au moins un moyen (404) agencé du côté du récepteur (304) et configuré pour sélectionner le réseau de téléphonie mobile (306) pour la réception de la communication téléphonique non synchronisée.

## Patentansprüche

1. Verfahren (100) zur Erfassung von Umgehungen eines Mobilfunknetzes (306) bei nicht synchronisierten, telefonischen Kommunikationsvorgängen, wobei das Verfahren (100) folgende Schritte umfasst:
- Erzeugung (102) mindestens einer Identifikationskennung, des sogenannten Nachricht-Identifikators;
- Senden (108) des Nachricht-Identifikators durch mindestens einen Sender (302) an mindestens einen Empfänger (304) über einen nicht synchronisierten, telefonischen Kommunikationsvorgang, der zumindest teilweise auf einem Mobilfunknetz (306) durchgeführt wird;
- Ermittlung (114, 118) mittels des Nachricht-Identifikators:
▪ mindestens einer Identifikationskennung, des sogenannten Senderidentifikators im Sendemodus, bezüglich der Übertragung des nicht synchronisierten Kommunikationsvorgangs, und
▪ mindestens einer Identifikationskennung, des sogenannten Senderidentifikators im Empfangsmodus, bezüglich der Übertragung des nicht synchronisierten, vom Empfänger (304) empfangenen Kommunikationsvorgangs; und
- Erfassung (118) einer Umgehung bei dem nicht synchronisierten, telefonischen Kommunikationsvorgang durch Abgleich der Senderidentifikatoren im Sende- und Empfangsmodus.

2. Verfahren (100) nach Anspruch 1, **dadurch gekennzeichnet, dass** der nicht synchronisierte, telefonische Kommunikationsvorgang aus einer Übertragung (108) einer Telefonnachricht vom Typ SMS oder MMS besteht und der Nachricht-Identifikator im Inhalt der Nachricht integriert ist.

3. Verfahren (100) nach einem der vorhergehenden Ansprüche, **dadurch gekennzeichnet, dass** der Nachricht-Identifikator nach einer vorbestimmten Regel generiert wird.

4. Verfahren (100) nach einem der vorhergehenden Ansprüche, **dadurch gekennzeichnet, dass** der mindestens eine Senderidentifikator im Sende- bzw. im Empfangsmodus umfasst:
- einen Identifikator einer technischen Stelle zur Weiterleitung des nicht synchronisierten Kommunikationsvorgangs und insbesondere der Nachricht, welcher Identifikator im Sendemodus verwendet bzw. vom Empfänger (304) empfangen wird; und/oder
- einen Identifikator des die Nachricht sendenden Senders (302) bzw. einen Empfängeridentifikator, der durch den Empfänger (304) empfangen wird.

5. Verfahren (100) nach einem der vorhergehenden Ansprüche, **dadurch gekennzeichnet, dass** der Schritt (118) zur Erfassung der Umgehung durch eine vom Sender (302) und/oder vom Empfänger (304) beabstandete Stelle (308) ausgeführt wird, wobei das Verfahren (100) außerdem folgende, vor dem Erkennungsschritt ausgeführte Schritte umfasst:
- eine Übertragung (110), von dem Sender (302) an die beabstandete Stelle (308), des wenigstens einen Senderidentifikators im Sendemodus in Verbindung mit dem Nachricht-Identifikator, und/oder
- eine Übertragung (116), von dem Empfänger (304) an die beabstandete Stelle (308), des wenigstens einen Senderidentifikators im Empfangsmodus in Verbindung mit dem Nachricht-Identifikator.

6. Verfahren (200) zur Erfassung von Umgehung bei nicht synchronisierten, telefonischen Kommunikationsvorgängen für eine Vielzahl von Mobilfunknetzen (306), folgende Schritte umfassend:
- Auswahl (202, 204) mindestens eines sogenannten Testnetzes aus der Vielzahl von Mobilfunknetzen (306);
- Erfassung einer Umgehung auf dem wenigstens einen Testnetz mit dem Verfahren (100) nach einem der vorhergehenden Ansprüche.

7. Verfahren (200) nach dem vorhergehenden Anspruch, **dadurch gekennzeichnet, dass** die Auswahl (202) des Testnetzes für die Übertragung des nicht synchronisierten, telefonischen Kommunikationsvorgangs im Sendemodus senderseitig (302) erfolgt.

8. Verfahren (200) nach einem der Ansprüche 6 oder 7, **dadurch gekennzeichnet, dass** die Auswahl (204) des Testnetzes für den Empfang des nicht synchronisierten, telefonischen Kommunikationsvorgangs im Empfangsmodus empfängerseitig (304) erfolgt.

9. System (300) zur Erfassung von Umgehungen eines Mobilfunknetzes (306) bei nicht synchronisierten, telefonischen Kommunikationsvorgängen, wobei das System (300) umfasst:
- mindestens eine Vorrichtung (312) zur Erzeugung mindestens einer Identifikationskennung, des sogenannten Nachricht-Identifikators;
- mindestens einen Sender (302, 320) zum Senden des Nachricht-Identifikators über einen nicht synchronisierten, telefonischen Kommunikationsvorgang, der zumindest teilweise auf einem Mobilfunknetz (306) durchgeführt wird;
- mindestens einen Empfänger (304, 322) des nicht synchronisierten, telefonischen Kommunikationsvorgangs,
- Vorrichtungen (328, 330) zur Ermittlung mit Hilfe des Nachricht-Identifikators:
▪ mindestens einer Identifikationskennung, des sogenannten Senderidentifikators im Sendemodus, bezüglich der Übertragung des nicht synchronisierten Kommunikationsvorgangs, und
▪ mindestens einer Identifikationskennung, des sogenannten Senderidentifikators im Empfangsmodus, bezüglich der Übertragung des nicht synchronisierten, vom Empfänger (304) empfangenen Kommunikationsvorgangs; und
- mindestens eine Vorrichtung (326) zum Abgleich der Senderidentifikatoren im Sende- und im Empfangsmodus zur Erfassung einer Umgehung bei dem nicht synchronisierten, telefonischen Kommunikationsvorgang.

10. System (400) zur Erfassung von Umgehung bei nicht synchronisierten, telefonischen Kommunikationsvorgängen für eine Vielzahl von Mobilfunknetzen (306), wobei das System (400) umfasst:
- mindestens eine Vorrichtung (402, 404) zur Auswahl wenigstens eines sogenannten Testnetzes aus der Vielzahl von Mobilfunknetzen (306), und
- ein System (300) zur Erfassung einer Umgehung nach dem vorhergehenden Anspruch auf dem mindestens einen Testnetz (306).

11. System (400) nach dem vorhergehenden Anspruch, **dadurch gekennzeichnet, dass** die mindestens eine Auswahlvorrichtung mindestens eine Vorrichtung (402) umfasst, welche senderseitig (302) angeordnet und derart ausgestaltet ist, um das Mobilfunknetz (306) zur Übertragung des nicht synchronisierten, telefonischen Kommunikationsvorgangs auszuwählen.

12. System (400) nach einem der Ansprüche 10 oder 11, **dadurch gekennzeichnet, dass** die mindestens eine Auswahlvorrichtung mindestens eine Vorrichtung (404) umfasst, welche empfängerseitig (304) angeordnet und derart ausgestaltet ist, um das Mobilfunknetz (306) zum Empfang des nicht synchronisierten, telefonischen Kommunikationsvorgangs auszuwählen.

## Claims

1. A method (100) for detecting the bypassing of a mobile telephony network (306) during unsynchronised telephone communications, said method (100) comprising the following steps:
- generating (102) at least one item of identification data, called message identifier;
- sending (108) said message identifier, by at least one emitter (302) to at least one receiver (304), via an unsynchronised telephone communication carried out at least in part over a mobile telephony network (306);
- determining (114, 118), using said message identifier:
• at least one item of identification data, called sender identifier on emission, relating to the emission of said unsynchronised communication, and
• at least one item of identification data, called sender identifier on reception, relating to the emission of said unsynchronised communication received by said receiver (304); and
- detecting (118) bypassing during said unsynchronised telephone communication by comparing said sender identifiers on emission and on reception.

2. The method (100) according to claim 1, **characterized in that** the unsynchronised telephone communication consists of sending (108) a telephone message of SMS or MMS type and the message identifier is inserted into the content of said message.

3. The method (100) according to any one of the preceding claims, **characterized in that** the message identifier is generated according to a pre-determined rule.

4. The method (100) according to any one of the preceding claims, **characterized in that** the at least one sender identifier on emission, respectively sender identifier on reception , comprises:
- an identifier of a routing service centre of said unsynchronised communication, and in particular of the message, used for sending, respectively received by the receiver (304), and/or
- an identifier of the emitter (302) sending the message, respectively a sender identifier received by the receiver (304).

5. The method (100) according to any one of the preceding claims, **characterized in that** the bypass detection step (118) is carried out by a site (308) remote from the emitter (302) and/or from the receiver (304), said method (100) moreover comprising the following steps carried out before said detection step:
- sending (110), from said emitter (302) to said remote site (308), the at least one sender identifier on emission with the message identifier, and/or
- sending (116), from said receiver (304) to said remote site (308), the at least one sender identifier on reception in combination with the message identifier.

6. A method (200) for detecting bypassing, during unsynchronised telephone communications, for a plurality of mobile telephony networks (306), comprising the following steps:
- selecting (202, 204), from said plurality of mobile telephony networks (306), at least one network called test network;
- detecting bypassing over said at least one test network by the method (100) according to any one of the preceding claims.

7. The method (200) according to the preceding claim, **characterized in that** selecting (202) the test network is carried out on the emitter (302) side for the emission of the unsynchronised telephone communication.

8. The method (200) according to any one of claims 6 or 7, **characterized in that** selecting (204) the test network is carried out on the receiver (304) side for the reception of the unsynchronised telephone communication.

9. A system (300) for detecting the bypassing of a mobile telephony network (306) during unsynchronised telephone communications, said system (300) comprising:
- at least one means (312) for generating at least one item of identification data, called message identifier;
- at least one emitter (302, 320) for sending said message identifier via an unsynchronised telephone communication carried out at least in part over a mobile telephony network (306);
- at least one receiver (304, 322) of said unsynchronised telephone communication;
- means (328, 330) for determining, using said message identifier:
• at least one item of identification data, called sender identifier on emission, relating to the transmission of said unsynchronised communication, and
• at least one item of identification data, called sender identifier on reception, relating to the transmission of said unsynchronised communication received by said receiver (304); and
- at least one means (326) for comparing said identifiers on emission and on reception for detecting bypassing during said unsynchronised telephone communication.

10. A system (400) for detecting bypassing, during unsynchronised telephone communications, for a plurality of mobile telephony networks (306), said system (400) comprising:
- at least one means (402, 404) for selecting, from said plurality of mobile telephony networks (306), at least one network called test network; and
- a system (300) for detecting bypassing according to the preceding claim, over said at least one test network (306).

11. The system (400) according to the preceding claim, **characterized in that** the at least one selection means comprises at least one means (402) arranged on the emitter (302) side and configured for selecting the mobile telephony network (306) for the emission of the unsynchronised telephone communication.

12. The system (400) according to any one of claims 10 or 11, **characterized in that** the at least one selection means comprise at least one means (404) arranged on the receiver (304) side and configured for selecting the mobile telephony network (306) for the reception of the unsynchronised telephone communication.
